# FASCICULE DE BREVET EUROPEEN

(11) **EP 2 411 717 B1**
(45) Date de publication et mention de la délivrance du brevet: **04.09.2013**
(21) Numéro de dépôt: 10716568.0
(22) Date de dépôt: 22.03.2010
(51) Int. Cl.: F16L 1/12, F16L 35/00, F16L 57/02, E21B 17/01

(54) **MANCHON DE PROTECTION POUR CONDUITE FLEXIBLE**
SCHUTZHÜLSE FÜR EIN FLEXIBLES ROHR
PROTECTIVE SLEEVE FOR A FLEXIBLE PIPE

(30) Priorité: 24.03.2009 FR 0901378
(43) Date de publication de la demande: 01.02.2012
(73) Titulaire: Technip France, 92400 Courbevoix (FR)
(72) Inventeur: ESPINASSE, Philippe, F-76420 Bihorel (FR); GEREZ, Jean-Michel, F-75015 Paris (FR)
(74) Mandataire: Gendron, Vincent Christian
(86) Numéro de dépôt international: PCT/FR2010/050514
(87) Numéro de publication internationale: WO 2010/109124

(56) Documents cités:
- EP-A2- 0 226 188
- EP-A2- 0 859 182
- WO-A1-2006/033579
- GB-A- 2 142 788
- GB-A- 2 316 461

## Description

La présente invention se rapporte aux manchons de protection destinés à préserver les conduites flexibles utilisées pour le transport de fluides tels des hydrocarbures et notamment du gaz, entre les installations offshore.

De telles conduites sont dites non liées ou liées selon leur structure, faite de couches superposées enroulées. On retrouvera les définitions précises de ces structures dans les « *Recommanded Practice for flexible pipe* » de l'American Petroleum Institute : API.

Plus particulièrement, l'invention porte sur un manchon raidisseur destiné à être monté autour d'une portion longitudinale de conduite flexible, usuellement près d'un embout de la conduite, pour résister à la flexion de ladite portion longitudinale selon une courbure quelconque de manière à préserver celle-ci de tout endommagement irréversible. L'endommagement peut résulter soit d'une flexion excessive de la portion de conduite flexible selon un faible rayon de courbure ou bien de la répétition des flexions, provoquées par les mouvements de la houle ou des courants marins.

Des manchons raidisseurs connus et largement utilisés dans le domaine des conduites pétrolières flexibles sont constitués d'un corps conique moulé dans un matériau plastique, généralement du polyuréthane. Ces manchons raidisseurs ou « *bend stiffener* » en langue anglaise, sont alors montés autour de la conduite flexible avant l'installation de l'embout. Ils présentent une masse relativement importante de plusieurs centaines de Kg, par exemple 900 Kg. Aussi, la manipulation et l'installation de ce type de manchon sont relativement mal aisées. De plus, ils sont réalisés d'une seule pièce d'un matériau polymérique dont le coût est relativement important et qui requière une technique de moulage adaptée. Un autre inconvénient est celui du remplacement de ce type de manchon raidisseur qui ne peut s'effectuer sans sectionner la section de conduite flexible qui le porte.

Pour pallier les inconvénients des manchons raidisseurs précités, il a été imaginé d'engager la portion de conduite à travers un ensemble de colliers, lesquels sont distribués à intervalles réguliers sur la longueur de la portion de conduite flexible à renforcer. Ces colliers comprennent des perçages axiaux destinés à recevoir des tiges métalliques flexibles régulièrement distribuées autour de la conduite.

Le document W02006/033579 divulgue un tel manchon raidisseur pour conduite flexible de transport des hydrocarbures. Les propriétés élastiques des tiges métalliques et leurs espacements sur le pourtour de la portion de conduite flexible définissent la raideur du manchon et par conséquent la résistance à la flexion subie par la portion de conduite flexible.

Cependant, lorsque les efforts de flexion exercés sur la portion de conduite sont trop importants les tiges métalliques flambent et le manchon raidisseur se courbe finalement en deçà d'un rayon de courbure acceptable par la conduite, et elle se dégrade.

Ainsi, un problème qui se pose et que vise à résoudre la présente invention est de fournir un manchon de protection qui permette non seulement de résister à la flexion de la conduite flexible, mais au-delà, qui permette d'interdire le fléchissement en deçà d'un rayon de courbure limite.

Dans le but de résoudre ce problème, la présente invention propose un manchon de protection apte à être installé autour d'une portion longitudinale de conduite flexible destinée au transport des hydrocarbures, pour résister à la flexion de ladite portion longitudinale selon une courbure quelconque. Ledit manchon comprend un ensemble d'anneaux présentant chacun deux flancs opposés, les anneaux dudit ensemble étant successivement maintenus ensemble coaxialement et les flancs respectivement en regard par une pluralité d'éléments de liaison axiaux élastiquement déformables répartis circulairement entre les flancs desdits anneaux. La flexion de ladite portion longitudinale est alors apte à provoquer la contraction des éléments de liaison situés vers l'intérieur de la courbure et simultanément, l'allongement des éléments de liaison opposés situés vers l'extérieur de la courbure pour résister à la flexion de ladite portion longitudinale de conduite flexible. Selon l'invention, chaque élément de liaison présente deux parties de fixation rigides opposées et un corps élastique déformable interposé entre lesdites deux parties de fixation pour autoriser le mouvement relatif desdites deux parties de fixation en engendrant des forces de rappel sur lesdites parties de fixation ; et lesdites parties de fixation de chaque élément de liaison sont respectivement fixées dans les flancs en regard desdits anneaux, de façon que la flexion de ladite portion longitudinale de conduite soit apte à provoquer la compression dudit corps élastique déformable des éléments de liaison axiaux de l'intérieur de la courbure et la traction des éléments de liaison axiaux de l'extérieur de la courbure pour transmettre les forces de rappels auxdits anneaux.

Ainsi, une caractéristique avantageuse de l'invention réside dans la mise en oeuvre d'éléments de liaison en trois parties, deux parties de fixation rigides, situées aux deux extrémités opposées dudit élément de liaison, et une partie constituée d'un corps élastique déformable, par exemple en matériau polymère, interposé entre lesdites deux parties rigides. De la sorte, lorsque la portion longitudinale fléchie, sous l'effet des mouvements de la mer, les anneaux solidaires de la conduite sont entraînés en mouvement et les portions d'anneaux orientés vers l'intérieur de la courbure se rapprochent les uns des autres et partant, les parties de fixation de chaque élément de liaison se rapprochent l'une de l'autre en comprimant le corps élastique. Ce dernier, en se déformant oppose une résistance à la compression et induit des forces opposées sur les parties de fixation. A l'extrême, le corps élastique comprimé devient également rigide et contribue au blocage des parties de fixation l'une vers l'autre.

Ainsi, pour certaines applications, par exemple lorsque la conduite flexible transporte du gaz naturel liquéfié, et pour laquelle de fortes contraintes tendant à provoquer sa flexion s'exercent, il est avantageux de pourvoir la conduite d'un manchon de protection conforme à l'invention, lequel permet de limiter le rayon de courbure de la portion de conduite flexible sur laquelle il est emmanché, à une valeur minimale.

Un tel manchon de protection est relativement peu coûteux et aussi plus léger que les manchons raidisseurs coniques en polyuréthane usuels. Il est par exemple constitué de modules comprenant un nombre déterminé d'anneaux, assemblables ensuite, ce qui rend plus aisés, son montage sur la conduite et le remplacement de l'un de ses modules comparativement aux solutions de l'art antérieur.

Selon un mode de mise en oeuvre de l'invention particulièrement avantageux, lesdits flancs de chaque anneau présentent un rebord circulaire interne situé vers le centre dudit anneau et qui s'étend sensiblement perpendiculairement audit flanc, et lesdits anneaux dudit ensemble d'anneaux sont maintenus rapprochés les uns des autres de façon que la flexion de ladite portion longitudinale soit apte à provoquer, en outre, la mise en contact respectivement des portions de rebord circulaire internes desdits anneaux situés vers l'intérieur de la courbure pour bloquer la flexion de ladite portion longitudinale de conduite. Ainsi, la mise en contact des portions de rebord circulaire internes, permet un blocage mécanique des anneaux vers l'intérieur de la courbure et interdit le fléchissement de la portion de conduite au-delà d'une certaine limite et en deçà d'un rayon de courbure limite. De la sorte, grâce au manchon de protection objet de l'invention, le contrôle de la courbure de la portion de conduite engagé à l'intérieur, est double. La résistance à la flexion du manchon de protection et la limitation de sa courbure permet déjà grâce aux éléments de liaison, de préserver la portion de conduite d'une courbure excessive et au surplus, la forme particulière des anneaux, permet leur contact et un blocage de la flexion du manchon et par conséquent de la conduite.

Avantageusement, les flancs desdits anneaux présentent une bordure circulaire externe située à l'opposé du centre dudit anneau par rapport audit rebord circulaire interne, et lesdites parties de fixation de chaque élément de liaison sont respectivement fixées dans lesdites bordures circulaires externes. Ainsi, les rebords circulaires internes des anneaux consécutifs sont susceptibles de venir en contact, tandis que les bordures circulaires externes demeurent espacées les une des autres en laissant un espace entre anneaux permettant de recevoir les éléments de liaison axiaux. Préférentiellement, lesdits anneaux sont respectivement formés de deux bagues concentriques encastrées l'une dans l'autre. L'une d'entre elle, la bague interne est plus large et elle est encastrée dans l'autre pour en être totalement solidaire pour former l'anneau.

De manière préférée, lesdits éléments de liaison sont constitués de silentblocs et lesdites deux parties de fixation rigides opposées comprennent d'une part, une douille de réception présentant un fond et une ouverture et d'autre part, un organe sensiblement tronconique adapté à être engagé à travers ladite ouverture de façon que la pointe dudit organe tronconique soit orienté vers ledit fond, tandis que ledit corps élastique déformable comprend un organe cylindrique creux apte à être engagé à l'intérieur de ladite douille et à recevoir ledit organe tronconique.

De plus cet organe cylindrique creux en PU est collé à l'intérieur de la douille, tandis que l'organe tronconique est collé lui à l'intérieur de l'organe cylindrique creux. Le mode de collage, acier sur PU, est suffisamment résistant pour supporter une déformation en traction de l'organe cylindrique creux, lorsque la douille et l'organe tronconique sont écartés l'un de l'autre, sans pour autant provoquer de désolidarisation des trois éléments.

Selon un mode préféré de mise en oeuvre de l'invention, ladite douille de réception présente une tige de douille solidaire dudit fond et qui s'étend à l'extérieur de ladite douille et à l'opposé de ladite ouverture, ladite tige de douille étant destinée à être engagée à travers lesdits anneaux selon une direction axiale pour solidariser ladite douille auxdits anneaux. Par exemple, comme on l'expliquera plus en détail dans la suite de la description, ladite tige de douille traverse ledit anneau de part en part et son extrémité libre est filetée pour recevoir un écrou qui prend appui contre le flanc opposé à celui qui reçoit la douille en appui. De la même façon, ledit organe tronconique présente avantageusement une tige d'organe tronconique solidaire dudit organe tronconique et qui s'étend à l'opposé de ladite pointe, ladite tige d'organe tronconique étant destinée à être engagée à travers lesdits anneaux selon une direction axiale pour solidariser ledit organe tronconique auxdits anneaux.

En outre, les anneaux dudit ensemble sont chacun avantageusement constitué de deux demi-coquilles assemblées par boulonnage, de manière à pouvoir être remplacés sans démonter l'ensemble du manchon.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective d'un élément constitutif du manchon de protection selon l'invention;
- la Figure 2 est une vue schématique en vue de côté de deux éléments constitutifs appariés;
- la Figure 3 est une vue schématique en perspective des moyens permettant l'appariement des deux éléments représentés sur la Figure 2;
- la Figure 4 est une vue schématique de côté illustrant un manchon de protection selon l'invention en vue de côté et dans une première position ; et,
- la Figure 5 est une vue schématique de côté du manchon de protection tel qu'illustré sur la Figure 4 dans une seconde position.

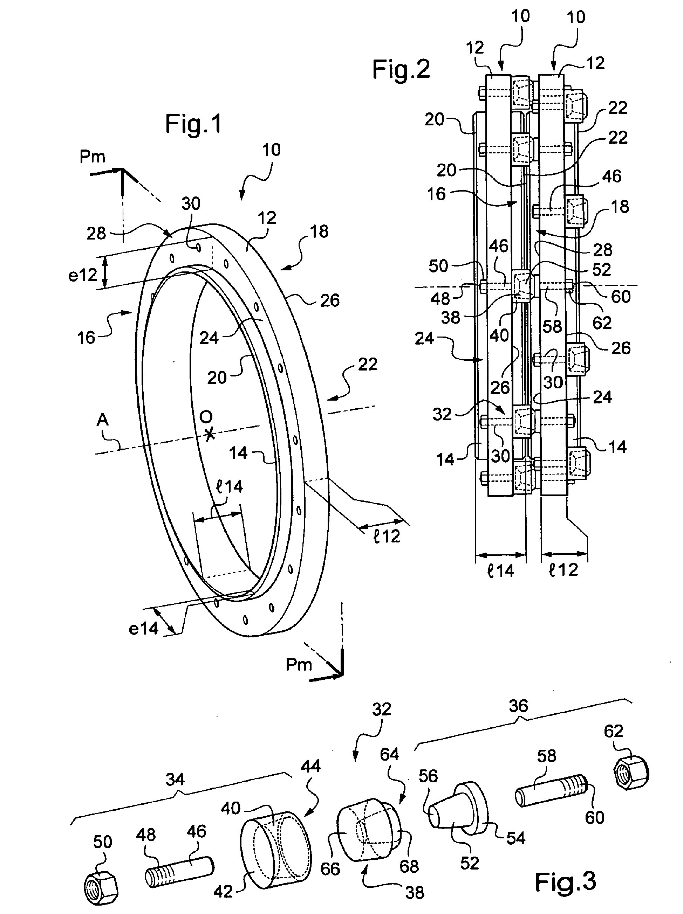

La Figure 1 illustre un anneau 10 d'axe de symétrie A et de centre O, formant une seule pièce et constitué de deux bagues concentriques, une bague externe 12 et une bague interne 14 encastrée à l'intérieur de la bague externe 12. Préférentiellement, les deux bagues concentriques sont solidarisées par soudage. L'anneau 10 présente deux flancs opposés 16, 18. La bague interne 14 présente un diamètre de 0,6 m par exemple, et une largeur axiale l14 bien supérieure à son épaisseur radiale e14; par exemple une largeur axiale l14 de 0,1 m pour une épaisseur radiale de 5 mm. La bague externe 12 présente un diamètre interne voisin du diamètre externe de la bague interne 14 de manière à pouvoir recevoir cette dernière en l'enserrant. La bague externe 12 présente une largeur axiale l12 inférieure à la largeur axiale l14 de la bague interne 14, par exemple 0,08 m, de manière à ce que la bague interne 14 forme deux rebords circulaires internes opposés 20, 22 symétriques l'un de l'autre par rapport au plan moyen Pm défini par la bague externe 12. Ainsi, la bague externe 12 forme deux épaulements opposés 24, 26 présentant respectivement une bordure circulaire 28. En outre, la bague externe 12 présente une épaisseur radiale e12, voisine de sa largeur axiale l12. Dans cette bordure circulaire 28, sont ménagés des perçages axiaux 30 traversant de part en part la bague externe 12. Sur la Figure 1 ces perçages axiaux 30 sont au nombre de seize et ils sont régulièrement répartis dans la bordure circulaire 28. Ainsi, dans l'exemple illustré ici, les perçages axiaux 30 sont espacés d'une distance voisine de 0,134 m.

Le manchon de protection conforme à l'invention est constitué d'un ensemble d'anneaux 10 du type illustré sur la Figure 1. Les anneaux 10 étant alors successivement maintenus ensemble et coaxialement, les flancs respectivement en regard, par une pluralité d'éléments de liaison axiaux élastiquement déformables constitués de silentblocs. À titre d'illustration, la Figure 2 montre deux anneaux 10 maintenus coaxialement par des éléments de liaison 32 formés de silentblocs que l'on va décrire d'abord en détail en référence à la Figure 3.

Ces éléments de liaison 32 présentent deux parties de fixation rigides opposées 34, 36 et un corps élastique déformable 38 destiné à être interposé entre les deux parties de fixation 34, 36. L'une des parties de fixation rigide 34 comporte une douille de réception 40 présentant un fond 42 et à l'opposé une ouverture 44. En outre, la douille de réception 40 est munie d'une tige de douille 46 destinée à être solidarisée axialement au fond 42 et à l'opposé de l'ouverture 44. La tige de douille 46 présente une longueur sensiblement supérieure à la largeur axiale l12 de la bague externe 12 et au surplus, son extrémité libre 48 est filetée de manière à pouvoir recevoir un écrou 50. De la sorte, elle peut être engagée à l'intérieur des perçages axiaux 30 de manière à solidariser la douille de réception 40 et la bague externe 12.

L'autre partie rigide 36 comporte un organe tronconique 52 présentant à la base une collerette 54 et à l'opposé une partie formant pointe 56. L'organe tronconique 52 est également muni d'une tige d'organe tronconique 58 montée solidaire coaxialement dans la base au niveau de la collerette 54. La tige d'organe tronconique 58 s'étend à l'opposé de la partie formant pointe 56 et son extrémité libre 60 est également filetée pour recevoir un second écrou 62. La tige d'organe tronconique 58 présente également une longueur sensiblement supérieure à la largeur axiale l12 de la bague externe 12 et elle est adaptée à être engagée à l'intérieur des perçages axiaux 30 pour solidariser l'organe tronconique 52 à la bague externe 12.

En outre, le corps élastique déformable 38 est constitué d'un organe cylindrique creux en matériau polymérique de type élastomère, par exemple en polyuréthane. L'organe cylindrique creux du corps élastique déformable 38 présente une ouverture d'entrée 64 et une paroi de fond opposée 66 le refermant. L'ouverture d'entrée 64 se prolonge par un espace 68 sensiblement tronconique, la base de cet espace étant orientée vers l'ouverture d'entrée 64, tandis que la pointe de cet espace est elle, orientée vers la paroi de fond 66. L'espace 68 sensiblement tronconique, présente des dimensions voisines de celles de l'organe tronconique 52 de manière à pouvoir le recevoir.

On se reportera à nouveau sur la Figure 2 pour décrire le mode d'appariement des anneaux 10. Les deux anneaux représentés sur la Figure 2 sont appariés au moyen de huit éléments de liaison 32 du type illustré sur la Figure 3. Apparaissent sur cette Figure, cinq éléments de liaison seulement, les trois autres étant situés en arrière de la Figure. En outre, les deux anneaux 10 sont ajustés coaxialement et leurs flancs 18,16 en regard, tandis que leurs seize perçages axiaux 30 respectifs sont situés en vis-à-vis. Les éléments de liaison 32 comprenant leurs deux parties de fixation rigide 34, 36 et leur corps élastique déformable 38, sont en revanche installés de proche en proche toutes les deux paires de perçages axiaux 30. Ainsi, on retrouve par exemple, au centre de la Figure, un élément de liaison 32. La tige de douille 46 est alors engagée dans un perçage axial 30, tandis que la tige d'organe tronconique 58 est engagée dans le perçage axial 30 en regard. Les écrous 50, 62 sont respectivement vissées sur les extrémités libres respectives 48, 60 des tiges pour d'une part maintenir la douille 40 en appui contre la bordure circulaire 28 de l'un des anneaux 10, et d'autre part maintenir l'organe tronconique 52 correspondant en appui contre la bordure circulaire 28 de l'autre anneau 10. Aussi, l'organe tronconique 52 est engagé à l'intérieur de l'espace 68 tronconique du corps élastique déformable 38. Les sept autres éléments de liaison 32 sont ajustés de la même manière pour finalement maintenir ensemble les deux anneaux 10. À l'équilibre, lorsque le corps élastique déformable 38 de chaque élément de liaison 32 est au repos et n'est ni comprimé ni étiré, les deux rebords en regard 20, 22 des bagues internes 14 sont espacés axialement l'un de l'autre d'une distance déterminée de l'ordre du millimètre, par exemple 4 mm.

On observera que les huit autres perçages axiaux 30 sont destinés à recevoir, pour l'anneau 10 situé à droite sur la Figure 2, la tige de douille 46 d'une seconde série d'éléments de liaison 32 pour le relier à un troisième anneau non représenté.

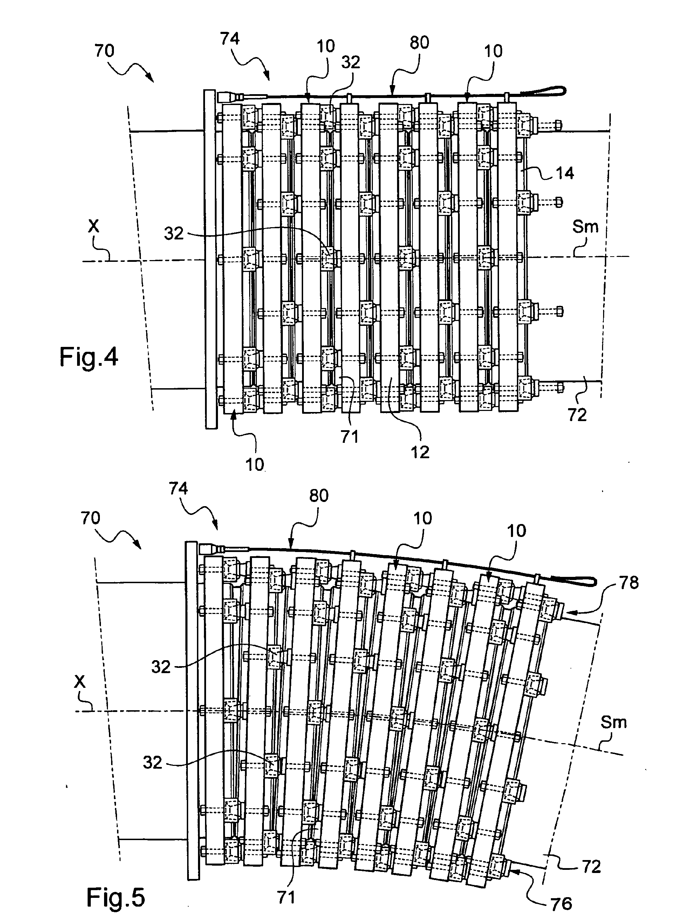

On se reportera à présent sur les Figures 4 et 5, illustrant un embout 70 d'une conduite tubulaire flexible 72 d'axe de symétrie X. L'embout 70 et alors équipé d'un manchon de protection 74 conforme à l'invention comportant ici un ensemble de huit anneaux 10 successifs et reliés ensemble d'une manière telle qu'illustrée sur la Figure 2. Ainsi, dans cette position les anneaux 10 sont ajustés coaxialement autour d'une portion 71 de la conduite flexible 72. Tous les anneaux 10 sont appariés deux à deux au moyen de huit éléments de liaison 32 et ainsi, les éléments de liaison 32 sont ajustés en quinconce par rapport à la surface cylindrique définie par les bagues externes 12.

Lorsque la conduite tubulaire flexible 72 s'étend longitudinalement selon l'axe X, le manchon de protection 74 est à l'équilibre, et les corps élastiques déformables 38 de chacun des éléments de liaison 32, ne sont ni comprimés ni étirés.

Lorsque la conduite tubulaire flexible 72 est fléchie, comme illustrée sur la Figure 5, l'embout 70 demeurant en position fixe, les portions internes 76 d'anneaux 10 situées vers l'intérieur de la courbure tendent à se rapprocher axialement les unes des autres, tandis que les portions externes 78 d'anneaux 10 situées vers l'extérieur de la courbure s'écartent les unes des autres. Le fléchissement de la portion de conduite 71 s'opère selon un plan ici verticale, de sorte que l'axe de symétrie X de la conduite tubulaire flexible 72 tend à se courber également dans ce plan vertical. L'axe de symétrie X est alors contenu dans une surface moyenne Sm courbée et perpendiculaire au plan vertical. À la manière d'une fibre neutre d'une poutre déformable, tous les éléments de liaison 32 situés au niveau de la surface moyenne Sm demeurent sensiblement au repos, tandis que tous les éléments de liaison 32 situés vers l'intérieur de la courbure en dessous de la surface moyenne Sm tendent à se contracter, et les éléments de liaison 32 situés à l'opposé par rapport à la surface moyenne Sm tendent au contraire à s'allonger. Dans une telle position des anneaux, on considérera qu'ils sont toujours maintenus ensemble coaxialement, même si l'axe de symétrie X se courbe.

Ainsi, pour les éléments de liaison 32 situés vers l'intérieur de la courbure, leur organe tronconique 52 tend à venir comprimer le corps élastique déformable 38 à l'intérieur de la douille de réception 40 en autorisant un mouvement axial des anneaux 10 les uns par rapport aux autres. En revanche, du fait de cette contraction, le corps élastique déformable 38 engendre une force de réaction qui tend à l'opposé, à écarter les anneaux 10 les uns des autres. C'est ce qui permet d'offrir une résistance à la flexion de la portion de conduite 71. À l'opposé, vers l'extérieur de la courbure, au dessus de la surface moyenne Sm, l'organe tronconique 72 des éléments de liaison 32 tend à ressortir de la douille de réception 40 et à étirer le corps élastique déformable 38 qui à l'inverse offre également une force de résistance à la traction.

Ainsi, grâce à ces forces antagonistes, vers l'intérieur de la courbure qui tendent à éloigner les anneaux 10 les uns des autres et vers l'extérieur qui tende à les rapprocher, le manchon de protection 74 permet d'offrir une résistance à la flexion de la portion de conduite 71.

Un autre avantage de l'invention, réside dans la mise en contact des rebords 20, 22 des anneaux 10 successifs vers l'intérieur de la courbure, lorsque celle-ci devient trop importante et que les éléments de liaison 32 ne suffisent plus à contrôler cette courbure. Ainsi, les rebords 20 22, au niveau des portions internes 76 d'anneaux 10 viennent successivement en butée les uns contre les autres et bloquent alors la flexion de la portion 71 de conduite flexible 72 emmanchée dans le manchon de protection 74. Ainsi le manchon de protection conforme à l'invention, présente toutes les fonctions d'un raidisseur et au surplus, celle d'un limiteur de courbure au-delà de laquelle la portion de conduite qu'il entoure ne peut être fléchie.

Par ailleurs, le manchon de protection conforme à l'invention n'est nullement limité à huit anneaux. Il est ainsi prévu de former des manchons de protection incluant bien plus d'anneaux de manière à limiter la courbure de plus longues portions de conduite. Au surplus, le nombre des éléments de liaison 32 pour apparier deux anneaux n'est pas non plus limitatif. On prévoit par exemple d'apparier les anneaux deux à deux au moyen de dix éléments de liaison. Quant au diamètre du manchon de protection, il est bien évidemment adapté au diamètre externe de la conduite flexible à préserver. En conséquence, il est prévu des diamètres d'anneaux inférieurs, par exemple de 0,4 m.

En outre un câble 80 s'étend dans la direction axiale le long du manchon de protection. Une première extrémité du câble est fixée sur l'embout de la conduite flexible, tandis que d'autres points d'accrochage sont également distribués le long du manchon de protection. Sur la figure 4 par exemple, apparait des points de fixation tous les 3 anneaux. Lors de la manipulation du manchon de protection ou de l'installation de la conduite flexible munie du manchon de protection, ce câble permet d'éviter qu'une élongation excessive ne se produise et endommage les anneaux du manchon de protection. Ainsi, la manipulation du manchon de protection est plus sécurisée.

En outre, on prévoit des anneaux constitués de deux demi-anneaux ajustables et maintenus ensemble par boulonnage afin de pouvoir remplacer plus aisément les anneaux détériorés de l'ensemble d'anneaux constituant le manchon de protection.

Le mode de réalisation décrit n'est nullement limitatif de l'invention. Notamment, il pourrait être avantageux de prévoir un manchon de protection avec une distribution de raideur répartie le long du manchon différente. Ceci est réalisable aisément en modulant l'espacement entre les anneaux de l'ensemble de protection. Pour cela, il suffit simplement de fournir des éléments de liaisons avec des éléments élastiquement déformables de longueurs différentes. A titre d'exemple, des éléments déformables de courtes longueurs pourraient être installés sur les anneaux les plus proches de l'embout. Puis des éléments de liaisons avec des corps élastiques de plus grandes longueurs pourraient être placés sur les anneaux les plus éloignés de l'embout.

## Revendications

1. Manchon de protection apte à être installé autour d'une portion longitudinale de conduite flexible (72) destinée au transport des hydrocarbures, pour résister à la flexion de ladite portion longitudinale selon une courbure quelconque, ledit manchon comprenant un ensemble d'anneaux présentant chacun deux flancs opposés (16, 18), les anneaux (10) dudit ensemble étant successivement maintenus ensemble coaxialement et les flancs (16, 18) respectivement en regard par une pluralité d'éléments de liaison (32) axiaux élastiquement déformables répartis circulairement entre les flancs (16, 18) desdits anneaux (10), la flexion de ladite portion longitudinale étant apte à provoquer la contraction des éléments de liaison (32) situés vers l'intérieur de la courbure et simultanément l'allongement des éléments de liaison (32) opposés situés vers l'extérieur de la courbure pour résister à la flexion de ladite portion longitudinale de conduite flexible (72) ;
**caractérisé en ce que** chaque élément de liaison (32) présente deux parties de fixation rigides opposées (34, 36) et un corps élastique déformable (38) interposé entre lesdites deux parties de fixation pour autoriser le mouvement relatif desdites deux parties de fixation en engendrant des forces de rappel sur lesdites parties de fixation ;
et **en ce que** lesdites parties de fixation (34, 36) de chaque élément de liaison (32) sont respectivement fixées dans les flancs (16, 18) en regard desdits anneaux (10), de façon que la flexion de ladite portion longitudinale de conduite soit apte à provoquer la compression dudit corps élastique déformable (38) des éléments de liaison (32) axiaux de l'intérieur de la courbure et la traction des éléments de liaison (32) axiaux de l'extérieur de la courbure pour transmettre les forces de rappels auxdits anneaux (10).

2. Manchon de protection selon la revendication 1, **caractérisé en ce que** ledit corps élastique déformable (38) est réalisé en matériau polymère.

3. Manchon de protection selon la revendication 1 ou 2, **caractérisé en ce que** lesdits flancs (16, 18) de chaque anneau (10) présentent un rebord circulaire interne (20, 22) situé vers le centre dudit anneau (10), et **en ce que** lesdits anneaux dudit ensemble d'anneaux sont maintenus rapprochés les uns des autres de façon que la flexion de ladite portion longitudinale soit apte à provoquer, en outre, la mise en contact respectivement des portions de rebord circulaire internes (20, 22) desdits anneaux (10) situés vers l'intérieur de la courbure pour bloquer la flexion de ladite portion longitudinale de conduite (72).

4. Manchon de protection selon la revendication 3, **caractérisé en ce que** les flancs (16, 18) desdits anneaux (10) présentent une bordure circulaire (28) externe située à l'opposé du centre dudit anneau par rapport audit rebord circulaire interne (20, 22), et **en ce que** lesdites parties de fixation (34, 36) de chaque élément de liaison sont respectivement fixées dans lesdites bordures circulaires (28) externes.

5. Manchon de protection selon la revendication 3 ou 4, **caractérisé en ce que** lesdits anneaux (10) sont respectivement formés de deux bagues concentriques (12, 14) encastrées l'une dans l'autre.

6. Manchon de protection selon l'une quelconque des revendications 1 à 5, **caractérisé en ce que** lesdites deux parties de fixation (34, 36) rigides opposées comprennent d'une part, une douille de réception présentant un fond (42) et une ouverture (44) et d'autre part, un organe sensiblement tronconique (52) adapté à être engagé à travers ladite ouverture (44) de façon que la pointe (56) dudit organe tronconique soit orienté vers ledit fond (42), tandis que ledit corps élastique déformable (38) comprend un organe cylindrique creux apte à être engagé à l'intérieur de ladite douille (40) et à recevoir ledit organe tronconique (52).

7. Manchon de protection selon la revendication 5, **caractérisé en ce que** ladite douille de réception (40) présente une tige de douille (46) solidaire dudit fond (42) et qui s'étend à l'extérieur de ladite douille et à l'opposé de ladite ouverture, ladite tige de douille (46) étant destinée à être engagée à travers lesdits anneaux (10) selon une direction axiale pour solidariser ladite douille (40) auxdits anneaux.

8. Manchon de protection selon la revendication 5 ou 6, **caractérisé en ce que** ledit organe tronconique (52) présente une tige d'organe tronconique (58) solidaire dudit organe tronconique et qui s'étend à l'opposé de ladite pointe (56), ladite tige d'organe tronconique étant destinée à être engagée à travers lesdits anneaux (10) selon une direction axiale pour solidariser ledit organe tronconique (52) auxdits anneaux.

9. Manchon de protection selon l'une quelconque des revendications 1 à 8 **caractérisé en ce que** les anneaux (10) dudit ensemble sont chacun constitué de deux demi-coquilles assemblées par boulonnage.

## Patentansprüche

1. Schutzhülse für die Installation um einen längsgerichteten Abschnitt einer flexiblen Rohrleitung (72) herum, die für den Transport von Kohlenwasserstoffen bestimmt ist, um der Biegung des längsgerichteten Abschnitts in einer beliebigen Krümmung standzuhalten, wobei die Hülse eine Anordnung von Ringen umfasst, die jeweils zwei entgegengesetzte Flanken (16, 18) aufweisen, wobei die Ringe (10) der Anordnung nacheinander in koaxialer Richtung zusammen und die Flanken (16, 18) jeweils gegenüber gehalten werden durch eine Vielzahl von axialen, elastisch verformbaren Verbindungselementen (32), die zwischen den Flanken (16, 18) der Ringe (10) kreisförmig verteilt sind, wobei die Biegung des längsgerichteten Abschnitts dafür geeignet ist, das Zusammenziehen der Verbindungselemente (32), die zum Inneren der Krümmung hin befindlich sind, und gleichzeitig das Dehnen der entgegengesetzten Verbindungselemente (32), die zum Äußeren der Krümmung hin befindlich sind, zu bewirken, um der Biegung des längsgerichteten Abschnitts der flexiblen Rohrleitung (72) standzuhalten;
**dadurch gekennzeichnet, dass** jedes Verbindungselement (32) zwei entgegengesetzte steife Befestigungsteile (34, 36) und einen verformbaren elastischen Körper (38) aufweist, der zwischen den zwei Befestigungsteilen angeordnet ist, um die relative Bewegung der zwei Befestigungsteile zu gestatten, indem er Rückstellkräfte an den Befestigungsteilen erzeugt;
und dass die Befestigungsteile (34, 36) jedes Verbindungselements (32) jeweils in den Flanken (16, 18) den Ringen (10) gegenüber befestigt sind, derart, dass die Biegung des längsgerichteten Abschnitts der Rohrleitung das Zusammendrücken des verformbaren elastischen Körpers (38) der axialen Verbindungselemente (32) vom Inneren der Krümmung und das Ziehen der axialen Verbindungselemente (32) vom Äußeren der Krümmung bewirken kann, um die Rückstellkräfte auf die Ringe (10) zu übertragen.

2. Schutzhülse nach Anspruch 1, **dadurch gekennzeichnet, dass** der verformbare elastische Körper (38) aus Polymermaterial realisiert ist.

3. Schutzhülse nach Anspruch 1 oder 2, **dadurch gekennzeichnet, dass** die Flanken (16, 18) jedes Rings (10) einen innen liegenden kreisförmigen Rücksprung (20, 22) aufweisen, der zu der Mitte des Rings (10) hin befindlich ist, und dass die Ringe der Anordnung von Ringen einander angenähert gehalten werden, derart, dass die Biegung des längsgerichteten Abschnitts ferner bewirken kann, dass Abschnitte des innen liegenden kreisförmigen Rücksprungs (20, 22) der Ringe (10), die zum Inneren der Krümmung hin befindlich sind, jeweils in Kontakt gebracht werden, um die Biegung des längsgerichteten Abschnitts der Rohrleitung (72) zu blockieren.

4. Schutzhülse nach Anspruch 3, **dadurch gekennzeichnet, dass** die Flanken (16, 18) der Ringe (10) einen außen liegenden kreisförmigen Rand (28) aufweisen, welcher der Mitte des Rings relativ zu dem innen liegenden kreisförmigen Rücksprung (20, 22) entgegengesetzt angeordnet ist, und dass die Befestigungsteile (34, 36) jedes Verbindungselements jeweils in den außen liegenden kreisförmigen Rändern (28) befestigt sind.

5. Schutzhülse nach Anspruch 3 oder 4, **dadurch gekennzeichnet, dass** die Ringe (10) jeweils von zwei konzentrischen Reifen (12, 14) gebildet sind, die ineinander gesteckt sind.

6. Schutzhülse nach einem der Ansprüche 1 bis 5, **dadurch gekennzeichnet, dass** die zwei steifen entgegengesetzten Befestigungsteile (34, 36) einerseits eine Aufnahmebuchse mit einem Boden (42) und einer Öffnung (44) und andererseits ein im Wesentlichen kegelstumpfförmiges Organ (52) umfassen, das dafür angepasst ist, durch die Öffnung (44) hindurch einzutreten, derart, dass die Spitze (56) des kegelstumpfförmigen Organs zu dem Boden (42) hin ausgerichtet ist, während der verformbare elastische Körper (38) ein zylindrisches Hohlorgan umfasst, das dafür angepasst ist, in das Innere der Buchse (40) einzutreten und das kegelstumpfförmige Organ (52) aufzunehmen.

7. Schutzhülse nach Anspruch 5, **dadurch gekennzeichnet, dass** die Aufnahmebuchse (40) einen Buchsenschaft (46) aufweist, der mit dem Boden (42) fest verbunden ist und sich nach außerhalb der Buchse hin und der Öffnung entgegengesetzt erstreckt, wobei der Buchsenschaft (46) dafür bestimmt ist, durch die Ringe (10) hindurch in einer axialen Richtung einzutreten, um die Buchse (40) mit den Ringen fest zu verbinden.

8. Schutzhülse nach Anspruch 5 oder 6, **dadurch gekennzeichnet, dass** das kegelstumpfförmige Organ (52) einen kegelstumpfförmigen Organschaft (58) aufweist, der mit dem kegelstumpfförmigen Organ fest verbunden ist und sich zu der Spitze (56) entgegengesetzt erstreckt, wobei der kegelstumpfförmige Organschaft dafür bestimmt ist, durch die Ringe (10) hindurch in einer axialen Richtung einzutreten, um das kegelstumpfförmige Organ (52) mit den Ringen fest zu verbinden.

9. Schutzhülse nach einem der Ansprüche 1 bis 8, **dadurch gekennzeichnet, dass** die Ringe (10) der Anordnung jeweils von zwei Halbschalen gebildet sind, die durch Verschraubung zusammengefügt sind.

## Claims

1. A protective sleeve that can be fitted around a longitudinal portion of flexible pipe (72) intended for the transportation of hydrocarbons, to withstand the deflection of said longitudinal portion according to any bend, said sleeve comprising a set of rings each having two opposite sides (16, 18), the rings (10) of said set being successively held together coaxially and the sides (16, 18) respectively facing by a plurality of elastically deformable axial link elements (32) distributed circularly between the sides (16, 18) of said rings (10), the deflection of said longitudinal portion being able to provoke the contraction of the link elements (32) situated toward the inside of the bend and simultaneously the elongation of the opposite link elements (32) situated toward the outside of the bend to withstand the deflection of said longitudinal portion of flexible pipe (72);
**characterized in that** each link element (32) has two opposite rigid fixing parts (34, 36) and a deformable elastic body (38) interposed between said two fixing parts to allow the relative movement of said two fixing parts by generating return forces on said fixing parts;
and **in that** said fixing parts (34, 36) of each link element (32) are respectively fixed in the facing sides (16, 18) of said rings (10), so that the deflection of said longitudinal portion of pipe can provoke the compression of said deformable elastic body (38) of the axial link elements (32) inside the bend and the traction of the axial link elements (32) on the outside of the bend to transmit the return forces to said rings (10).

2. The protective sleeve as claimed in claim 1, **characterized in that** said deformable elastic body (38) is made of polymer material.

3. The protective sleeve as claimed in claim 1 or 2, **characterized in that** said sides (16, 18) of each ring (10) have an internal circular flange (20, 22) situated toward the center of said ring (10), and **in that** said rings of said set of rings are held close to one another so that the deflection of said longitudinal portion can also provoke the respective coming-into-contact of the internal circular flange portions (20, 22) of said rings (10) situated toward the inside of the bend to block the deflection of said longitudinal portion of pipe (72).

4. The protective sleeve as claimed in claim 3, **characterized in that** the sides (16, 18) of said rings (10) have an outer circular edge (28) situated opposite the center of said ring relative to said internal circular flange (20, 22), and **in that** said fixing parts (34, 36) of each link element are respectively fixed in said outer circular edges (28).

5. The protective sleeve as claimed in claim 3 or 4, **characterized in that** said rings (10) are respectively formed by two concentric bushings (12, 14) fixed in one another.

6. The protective sleeve as claimed in any one of claims 1 to 5, **characterized in that** said two opposite rigid fixing parts (34, 36) comprise, on the one hand, a receiving bush having a bottom (42) and an opening (44) and, on the other hand, a substantially tapered member (52) adapted to be fitted through said opening (44) so that the point (56) of said tapered member is oriented toward said bottom (42), whereas said deformable elastic body (38) comprises a hollow cylindrical member which can be fitted inside said bush (40) and receive said tapered member (52).

7. The protective sleeve as claimed in claim 5, **characterized in that** said receiving bush (40) has a bush rod (46) fastened to said bottom (42) and which extends outside of said bush and opposite said opening, said bush rod (46) being intended to be fitted through said rings (10) in an axial direction to fasten said bush (40) to said rings.

8. The protective sleeve as claimed in claim 5 or 6, **characterized in that** said tapered member (52) has a tapered member rod (58) fastened to said tapered member and which extends opposite said point (56), said tapered member rod being intended to be fitted through said rings (10) in an axial direction to fasten said tapered member (52) to said rings.

9. The protective sleeve as claimed in any one of claims 1 to 8, **characterized in that** the rings (10) of said set each consist of two half-shells assembled by bolting.
